# EUROPEAN PATENT APPLICATION

(11) **EP 1 721 872 A1**
(43) Date of publication of application: **15.11.2006**
(21) Application number: 05291005.6
(22) Date of filing: 10.05.2005
(51) Int. Cl.: C03B 17/06

(54) **Method of producing a glass sheet**

(71) Applicant: Corning Incorporated, Corning, NY 14831 (US)
(72) Inventor: Dannoux, Thierry Luc Alain, 77210 Avon (FR); Hervé, Patrick Jean Pierre, Corning New York 14830 (US); Lereboullet, Jean Pierre, 75013 Paris (FR); Vanotti, Claude Jacques Julien, 77310 Ponthierry Saint Fargeau (FR)
(74) Representative: Boon, Graham Anthony

(57) **Abstract**

A method for manufacturing high quality glass panel includes producing a substantially planar glass sheet (32) having a first portion (34) and an end portion (36), wherein the first portion (34) and the end portion (36) are both in a substantially vertical first orientation, and twisting the end portion (36) of the glass sheet (32) to a second orientation (B) that is different from the first orientation (A) while the first portion of the glass sheet remains in a first orientation and the end portion of the glass sheet remains attached to the first portion of the glass sheet. The method further includes heat treating the end portion of the glass sheet.

## Description

### BACKGROUND OF THE INVENTION

### FIELD OF THE INVENTION

The present invention relates to a method for manufacturing a high quality glass sheet, and in particular to a method for manufacturing specialty glass panels such as can be used for "LCD" type panels, wherein a glass sheet is drawn vertically downward from a forming apparatus and is subsequently processed so as to reduce or eliminate contact with a viewing area of resultant glass panes, and further to prevent glass deformation.

### TECHNICAL BACKGROUND

A wide variety of video display units utilize liquid crystal displays or LCDs, including electronic units such as laptops and personal data assistants. These particular applications require that the glass panels with which the LCD's are associated exhibit consistently-planar characteristics, while allowing for economic mass production.

High quality flat glass for products such as LCD panels are typically produced via a draw-type process, wherein a continuous glass ribbon or sheet is drawn downwardly from a forming apparatus, and wherein individual glass panels are severed from an end of the continuous glass sheet as the glass sheet is drawn downwardly. Of course, the draw rate of the glass sheet must be precisely maintained in order to assure consistent thicknesses and optical characteristics across the width of the sheet.

An economical thin glass sheet forming process providing pristine surfaces is difficult to achieve. The fusion draw process provides this quality attribute and constitutes an advantage over alternative sheet forming techniques used within the industry, such as the float process, that require additional finishing and polishing operations subsequent to forming of the LCD panels.

Currently, there are significant limitations to increasing the production rates (glass flow) as related to the fusion draw process, as increased throughputs can have a deleterious effect on other critical processes such as temperature control and glass compaction. For example, for a given sheet thickness, an increase in glass flow necessarily translates into an increase in velocity and therefore a faster cooling rate for the material. This modified thermal history generally induces higher stresses within the material, thereby resulting in higher compaction and distortion of the glass. Another limitation with the current vertically oriented system configuration utilized for the fusion draw process is that it is difficult to provide sufficient room for modifying the thermal history of the glass ribbon as it is produced, generally necessitating an increase to the height of the system or apparatus. However, even a slight increase in height of the overall apparatus would result in a significant capital expense and still limited flexibility for other changes.

Another problem associated with the current fusion draw process as well as other processes utilized in manufacturing glass for products such as LCD panels is the requirement for significantly large areas in which to store each individual LCD panel as the panel is heat treated or annealed. Typically, the glass sheet is heat treated during the manufacturing process and within a relatively short period of time. One reason for heat treating the glass is to reduce the amount of compaction the glass undergoes during subsequent processing. Typically, LCDs are of the amorphous silicon (α-Si) thin film transistor (TFT) or polycrystalline-silicon (poly-Si)TFT type. Many display devices currently utilize α-Si, the processing of which may be accomplished at temperatures under 450°C, and annealing times can be relatively short - on the order of less than about 2 minutes. However, poly-Si processing is preferred. Poly-Si has a much higher drive current and electron mobility, thereby increasing the response time of the pixels. Further, it is possible, using poly-Si processing, to build the display drive circuitry directly on the glass substrate. By contrast, α-Si requires discrete driver chips that must be attached to the display periphery utilizing integrated circuit packaging techniques. The most efficient poly-Si processing methods operate at temperatures of at least 800°C. Such processes enable formation of poly-Si films having extremely high electron mobility (for rapid switching) and excellent TFT uniformity across large areas. For other electronic devices, common processing steps also require high temperature substrates to withstand processing. Most high level electronic fabrication requires annealing of the gate oxide and dopant activation. These processes occur at temperatures in excess of 600°C.

Even in the case of single crystal silicon (x-Si) fabrication techniques that employ a thin layer of single crystal silicon bonded to a substrate, high temperature substrates are required. Single crystal silicon allows for even greater electron mobility than that achieved with poly-Si. The bonding step often requires high temperatures as well as the gate oxide and dopant activation steps previously described.

The evolution from α-Si to poly-Si and more recently x-Si has presented a major challenge to use of a glass substrate. As previously stated, poly-Si and x-Si coatings require much higher processing temperatures than does α-Si, in the range of 600-700° C. Thus, the glass substrate must be thermally stable at such temperatures. Thermal stability (i.e. thermal compaction or shrinkage) is dependent upon both the inherent viscous nature of a particular glass composition (as indicated by its strain point) and the thermal history of the glass sheet as determined by the manufacturing process. High temperature processing, such as required by poly-Si TFTs, may require long annealing times for the glass substrate to ensure low compaction, e.g. 5 hours at 600°C.

The vertical nature of the fusion draw process places practical constraints on the height of the glass forming apparatus and therefore on the ability to perform in-line annealing of the glass. Typically, annealing of the display glass in a fusion draw process is accomplished by severing at the bottom of the draw individual glass panels from the glass sheet being drawn and stacking the panels in a horizontal orientation with respect to one another into storage racks. In order to prevent contamination to the surface of the panels, each panel is supported between supporting arms or pins that contact only the outer edges of each panel. This supporting method can result in the thin panels tending to warp or bend across the unsupported span between the supporting means. This also limits the maximum size panel that may be supported in this manner without causing damage to the supported or adjacent panels, or requires that the panels be supported at intermediate points. Moreover, the number of panels which may be arranged within a given volume is also limited, decreasing process efficiency and increasing cost.

Another disadvantage to current methods of production includes contamination of the drawn glass ribbon by glass particles generated during the severing of each individual glass panel, which is typically done while the glass ribbon is in a vertical orientation and typically in relative close proximity to a location where the glass ribbon is being formed. Again, due to the vertical nature of the draw process, the heat generated during the process causes a chimney effect, wherein heated air flows rapidly upward in the process area in close proximity to the glass sheet. Consequently, the drawn glass is particularly susceptible to contamination by cut glass particles. It would therefore be desirable to effectively increase the distance traversed by the glass sheet as it is drawn in order to allow for at least partial in-line annealing of the glass, and to further allow for cutting of the glass sheet at a location removed from the vertical vicinity of the draw area.

### SUMMARY OF THE INVENTION

This invention relates to a method for manufacturing glass sheet that includes producing a substantially planar glass sheet having a first portion and an end portion, wherein the first portion and the end portion are both in a substantially vertical first orientation. The method also includes twisting the end portion of the glass sheet to a second orientation that is substantially orthogonal to the first orientation while the first portion of the glass sheet remains in the first orientation, the end portion of the glass sheet remains attached to the first portion of the glass sheet, and the end portion of the glass sheet is substantially vertically oriented. The method may further include heat treating the end portion of the glass sheet. Moreover, the method may further include deflecting the end portion of the glass sheet into an arcuate shape along at least a portion of a longitudinal axis of the glass sheet subsequent to twisting the end portion.
Preferaby, the arcuate shape comprises a substantially sinusoidal shape.

The method may further including heat treating the end portion. In one embodiment, the end portion is heat treated prior to being severed to form a separate glass panel. In another embodiment, the end portion is severed to form a separate glass panel. Thereafter, the glass panel is heat treated. The end portion may be heat treated, and, after having been severed to form a separate glass panel, the glass panel may subsequently be heat treated.

The step of producing the glass sheet may include providing the glass sheet with a pair of edges portions and a body portion positioned between the edge portions, and wherein the step of twisting (reorienting) the glass sheet is performed without contacting the body portion of the glass sheet. The step of twisting the glass sheet may also include supporting the glass sheet edge portions with air bearings as the glass sheet is being twisted.

In still another embodiment, the end portion may be supported by clamping at least one of the pair of edges with a clamping mechanism

This invention also relates to a method for manufacturing a glass sheet comprising producing a substantially planar glass sheet having a pair of edge portions and a body portion therebetween, the glass sheet also including a first portion and a second or end portion, wherein the first portion and the second portion both travel in a first direction. The method also includes reorienting the second portion of the glass sheet such that the second portion travels in a second direction that is different from the first direction while the first portion of the glass sheet continues to travel in the first direction and the second portion of the glass sheet remains attached to the first portion of the glass sheet, and forming the second portion of the glass sheet into an arcuate shape along a longitudinal axis of the second portion subsequent to reorientating the second portion and while the second portion continues to travel in the second direction.

In one embodiment of the present method, the first direction is vertical and the second direction is horizontal. The arcuate shape preferably comprises a substantially sinusoidal shape. The present method may further include heat treating the second portion of the glass sheet.

Reorienting of the second portion of the sheet may comprise reorienting the second portion of the sheet such that the second portion of the sheet is substantially vertically oriented. The glass sheet is supported while being reoriented without contacting the body portion of the glass sheet. That is, in one embodiment the reorientation occurs without contacting the body portion of the glass sheet. Moreover, the reorientation may be performed by supporting the edge portions of the glass sheet using air bearings. The second portion of the glass sheet may be supported subsequent to the reorienting step by clamping at least one of the pair of edges with a clamping mechanism. The clamping mechanism way comprise a conveyor on which are arranged a plurality of clamping mechanisms which travel with, and support, the glass sheet.

The method may also include severing the end portion to form a separate glass panel.
The glass panel may be heat treated subsequent to the severing.

This invention is further related to a method for manufacturing a glass sheet comprising producing a substantially planar glass sheet having a first portion and a second (end) portion, wherein the first portion and the second portion are both in the same given orientation, and reorienting the second portion of the glass sheet to a second orientation that is different from the first orientation by forming a helicoidal turn in the glass sheet. In accordance with the present method, a direction of travel of the first portion may be substantially vertical.

In accordance with one embodiment of the method, the step of reorienting comprises supporting the glass sheet without contacting the body portion of the glass sheet. Subsequent to the reorienting, the second portion may be heat treated. The method may also include supporting the glass sheet by clamping at least one of the edges with a clamping mechanism. The second portion may further be deflected into a arcuate shape while a direction of travel of the second portion is maintained substantially horizontal. The method may further comprise severing the end portion to form a separate glass panel. In some instances it may be necessary to heat treat the glass panel.

The method for manufacturing glass panels as shown and described herein results in a reduction in manufacturing costs typically associated with the same, while simultaneously reducing or eliminating contamination relating to associated cutting processes. The method of the invention also reduces floor space required for associated thermal treatment, and providing sufficient and adequate support for glass sheeting while simultaneously reducing optical distortion of the panel.

### BRIEF DESCRIPTION OF THE DRAWINGS

While this application concludes with claims particularly pointing out and distinctly claiming the present invention, it is believed the same will be better understood from the following description taken in conjunction with the accompanying drawings in which:

Fig. 1 is a partially schematic view of an exemplary manufacturing apparatus by which a method of manufacturing glass panels in accordance with the present invention can be accomplished;

Fig. 2 is a cutaway perspective view of a overflow glass sheet drawing apparatus comprising the manufacturing apparatus of FIG. 1;

FIG. 3 is a perspective view of an apparatus according to the present invention for forming a helicoidal turn in a glass sheet.

FIG. 4 is a perspective view of air bearings utilized to re-orient or reshape a glass sheet produced within the manufacturing apparatus;

Fig. 5 is a perspective view of a roller assembly utilized to support the glass sheet;

Fig. 6 is a perspective view of a plurality of rolling conveyor belts utilized to support the glass sheet;

Fig. 7 is a perspective view of a clamping mechanism utilized to support the glass sheet;

Fig. 8 is a cross-sectional side view of a pair of jaws of the clamping mechanism, taken along the line IV-IV, Fig. 7;

Fig. 9 is a partially schematic view of a track assembly including a plurality of clamping mechanisms utilized to support the glass sheet;

Fig. 10 is a perspective view of a vertically-oriented glass sheet having an induced sinusoidal wave-type pattern;

Fig. 11 is a side view of an embodiment according to the present invention wherein the glass sheet is reoriented such that the end portion is substantially horizontal;

Fig. 12 is a perspective view of a horizontally-oriented glass sheet having an induced sinusoidal wave-type pattern.

Fig. 13a is a side view of glass panels arranged in a stacked configuration wherein the individual panels have an upward bow induced across the span of each panel; and

FIG. 13b is a side view of glass panels arranged in a stacked configuration wherein the individual panels are allowed to sag.

### DETAILED DESCRIPTION OF THE PREFERRED EMBODIMENTS

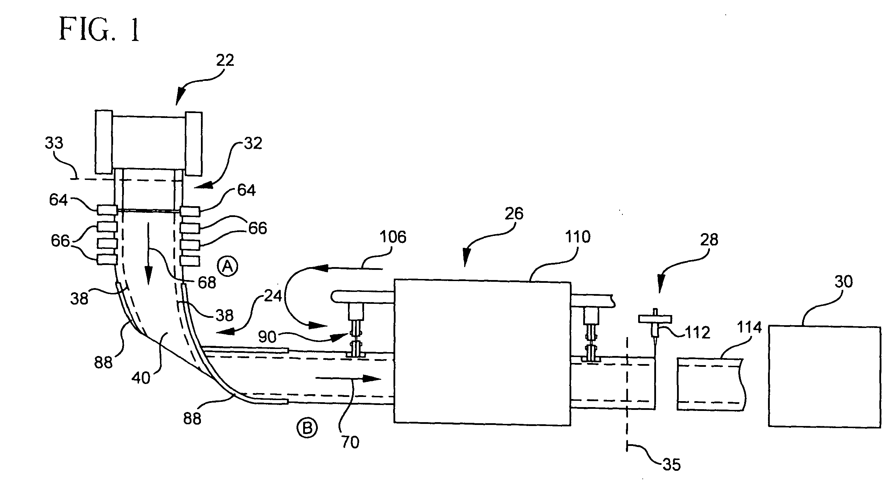

For purposes of description herein, the terms "upper," "lower," "right," "left," "rear," "front," "vertical," "horizontal," and derivatives thereof shall relate to the exemplary illustration of the invention as oriented in FIG. 1. However, it is to be understood that the apparatus and method of the present invention can be embodied in various alternative orientations and step sequences, except where expressly specified to the contrary. It is also to be understood that the specific devices and processes illustrated in the attached drawings, and described in the following specification are intended to provide only exemplary embodiments of the inventive concepts defined in the appended claims. Hence, specific dimensions and other physical characteristics relating to the embodiments disclosed herein are not to be considered as limiting, unless expressly stated by the claims.

Reference numeral **20** (FIG. 1) generally designates a manufacturing apparatus by which the method of manufacturing of the subject invention can be accomplished. The apparatus **20** comprises several components, including glass sheet forming device **22,** glass sheet reorientation assembly **24,** first heat treating station **26** and cutting or severing station **28.** The apparatus may also include a second heat treating station **30.** The method for manufacturing a glass panel includes producing a substantially planar glass sheet **32** having a first portion **34** and an end portion **36** that are both originally in a substantially vertical first orientation (A). The glass sheet **32** is further formed to include a pair of edge portions **38** and a body portion **40** located therebetween, wherein edge portions **38** lie outside the area that will comprise an eventual critical area of a glass panel cut from the sheet, such as a viewing area of an LCD panel, when utilized within an associated component. The method also includes twisting glass sheet **32** via glass sheet reorientation assembly **24** such that end portion **36** assumes a second orientation **(B)** that is angularly oriented to first orientation **(A).** As illustrated, first portion **34** of glass sheet **32** remains in the first orientation and end portion **36** of glass sheet **32** remains attached to first portion **34** of glass sheet **32** as the glass sheet travels through and extends along its modified second orientation. As also shown, end portion **36** of glass sheet **32** is in a substantially vertical orientation which is different than the vertical orientation of first portion **34.** In other words, as illustrated in FIG. 1, while glass sheet **32** has been reoriented from a substantially vertical position with its edge portions **38** on the sides, it is now still substantially vertical, but its edge portions **38** are now located on the top and bottom portions of the sheet. Of course, should end portion **36** be reoriented through a angle different than 90° from the first orientation, edge portions **38** would assume some intermediate position between "sides" (as in orientation (**A**)) and "top" and "bottom", shown in FIG. 1.

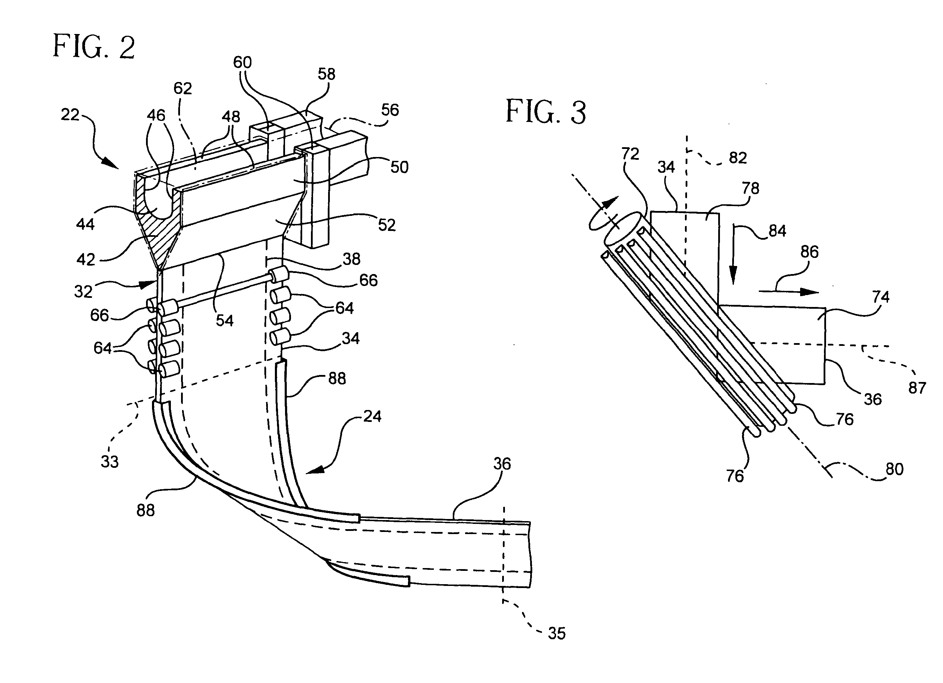

Sheet forming device **22** is typically utilized in an overflow fusion method of glass production, and is shown in more detail in FIG. 2. The overflow sheet manufacturing process is described for example in U.S. Patent 3,338,696 and U.S. Patent 3,682,609, the disclosures of which are hereby incorporated herein by reference in their entirety. As illustrated in FIG. 2, apparatus **22** comprises an overflow trough member of forming wedge **42** having an upwardly open channel **44** bounded on its longitudinal sides by wall portions **46,** which terminate at their upper extent in opposed longitudinally-extending overflow lips or weirs **48.** The weirs **48** communicate with opposed outer sheet forming surfaces of wedge member **42.** As shown, wedge member **42** is provided with a pair of substantially vertical forming surface portions **50** which communicate with weirs **48,** and a pair of downwardly inclined converging surface portions **52** which terminate at a substantially horizontal lower apex or root **54** forming a straight glass draw line.

Molten glass **56** is fed into channel **44** by means of delivery passage **58** communicating with channel **44.** The feed into channel **44** may be single ended or, if desired, double ended. A pair of restricting dams **60** are provided above overflow weirs **48** adjacent each end of channel **44** to direct the overflow of free surface **62** of molten glass **56** over overflow weirs **48** as separate streams, and down opposed forming surface portions **50, 52** to root **54** where the separate streams, shown in chain lines, converge to form virgin-surfaced glass sheet **32.**

In the overflow downdraw fusion process, pulling rolls **64** are placed downstream of the root **54** of wedge member **42** and are used to adjust the rate at which the formed ribbon of glass leaves the converging forming surfaces and thus determine the nominal thickness of the finished sheet. Suitable pulling rolls are described for example in published U.S. Patent Application No. 2003/0181302, the contents of which are incorporated in their entirety herein by reference. The pulling rolls are preferably designed to contact the glass ribbon at its edge portions **38,** specifically, in regions just inboard of the thickened beads which exist at the very edges of the sheet. The glass edge portions **38** which are contacted by the pulling rolls are later discarded from the sheet.

Glass sheet **32** as drawn from glass sheet forming device **22** may be guided vertically downward after the pulling rolls to reorientation assembly **24** by a plurality of additional roller assemblies, hereinafter edge rolls **66** and which are described in greater detail herein, to support, guide and/or stretch the glass sheet. The reorientation and/or reshaping of glass sheet **32** is done while glass sheet **32** is entering a temperature region where the glass is becoming elastic.

In operation, glass sheet **32** (Fig. 2) is first supported by edge rolls **66** and then bent upward through a vertical angle relative to vertical first portion **34** while being simultaneously rotated. Thus a helicoidal turn (i.e. spiral) may be placed in glass sheet **32** wherein the flow of the glass sheet undergoes a directional change from a first direction indicated by arrow **68** (FIG. 1) to a second direction indicated by arrow **70** (FIG. 1). That is, a transverse axis of first portion **34** is misaligned to a transverse axis of second, end portion **36.** By misaligned what is meant is that a transverse axis of the first portion is nonparallel with a transverse axis of the second portion (end portion). The overall change in direction is of course dependent, inter alia, upon the angle of the cylinders and rollers with respect to reference direction, e.g. a longitudinal axis of the sheet. The skilled artisan will understand that the angles used to twist (i.e. bend and rotate) the glass sheet may be varied depending upon the layout of the manufacturing facility and the floor space available. Preferably, transverse axis **35** is perpendicular to transverse axis **33** and glass sheet **32** is twisted such that end portion **36** of glass sheet **32** that emerges from reorientation assembly **24** extends substantially orthogonally from first portion **34** of glass sheet **32,** but such that the plane of first portion **34** of glass sheet **32** is substantially parallel to the plane of end portion **36.** In a preferred embodiment, the surfaces (faces) of glass sheet **32** are vertically oriented and the edge portions now form top and bottom edge portions **38** of end portion **36.**

In one embodiment, a representation of which is shown in FIG. 3, the simultaneous bending and rotating action performed by reorientation assembly **24** and described supra is demonstrated by a thin sheet of flexible material (glass as used herein) following a helicoidal path as it passes between and is guided by a single, large-radius central cylinder **72** in contact with a first surface **74** of the material, and a second group of small-radius rollers **76** arranged in concentric fashion around at least a portion of the central cylinder and in contact with the opposite, second surface **78** of the sheet. The axis of rotation **80** of the large-radius roller is parallel to the axes of rotation of the small radius rollers, and forms an angle with respect to a longitudinal (or horizontal) axis of the material.

The configuration illustrated in FIG. 3 effectively accomplishes a change in direction of the path of the material. For example, if the angle of the central roller axis **80** with respect to vertical longitudinal axis **82** of the sheet is 45°, as illustrated in FIG. 3, the sheet can be seen to incur a 90° change in direction of flow, changing from a first direction of flow indicated by arrow **84,** which is vertical, to a second direction of flow indicated by arrow **86,** which is substantially horizontal. Additionally, in the example shown a vector which is normal to the first surface prior to the helicoidal turn undergoes a 180° change in direction as the sheet travels between the cylinders. Described differently, a second, end portion **36** of sheet **32** is twisted relative to a first, vertical portion **34** of sheet **32.** To wit, the plane of vertical first portion **34** is substantially parallel to the plane of end portion **36,** but the direction of travel of end portion **36** is perpendicular to the direction of travel of first portion **34.** Preferably also, end portion **36** is oriented such that the broad sides (i.e. faces) of end portion **36** are vertical. The skilled artisan will recognize that the glass sheet may be twisted such that the end portion is not orthogonal to the first portion (i.e. the direction of travel of the end portion is not perpendicular to the direction of travel of the first portion), resulting in the longitudinal axis of the end portion forming an angle with the vertical longitudinal axis of the first portion which may be, for example, 25°, 50° or 100°. More generally speaking, after the reorientation of glass sheet **32,** transverse axis **35** of end portion **36** (i.e. an axis perpendicular to direction of travel **86** of the end portion) is misaligned to (i.e. not parallel with) transverse axis **33** (i.e. an axis perpendicular to direction of travel **84** of the first portion) of first portion **34.** If, on the other hand, sheet **32** where bent without a rotational component (i.e. not twisted), transverse axis **33** would be parallel with transverse axis **35.**

While the method described in the embodiment supra and illustrated in FIG. 3 may be adequate for some glass-making processes, for processes which produce glass panels for LCD devices, contact with the interior portion of the glass surface may impart flaws to that surface, therefore making the method less desirable for such panels.

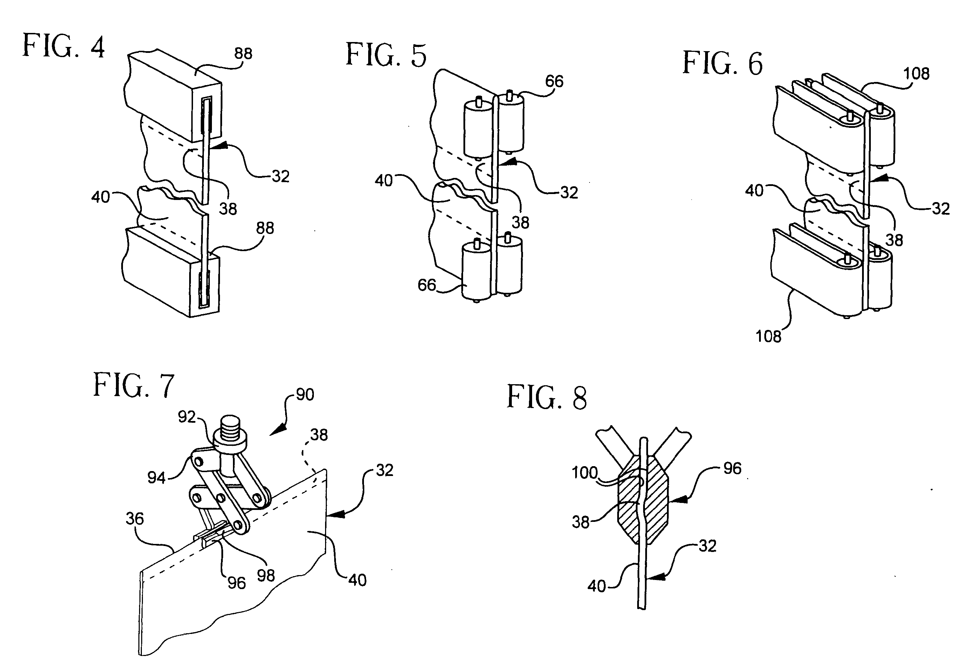

In accordance therefore with another embodiment of the present invention, a preferred method for twisting glass sheet **32** which does not contact interior body portion **40** of the glass sheet may be substituted for the method above. For example, as shown in FIGS. 1 - 2, reorientation assembly **24** preferably includes air bearings **88** that utilize principles for air bearings as are known in the art to support edge portions **38.** An exemplary embodiment of an air bearing is presented in FIG. 4. Thus, edge portions **38** are supported and guided by air bearings **88** as the sheet is transported through the helicoidal turn. Alternatively, edge portions **38** may be supported by contact with a plurality of edge roll pairs, illustrated in FIG. 5, or by a moving belt assembly, as shown in FIG. 6.

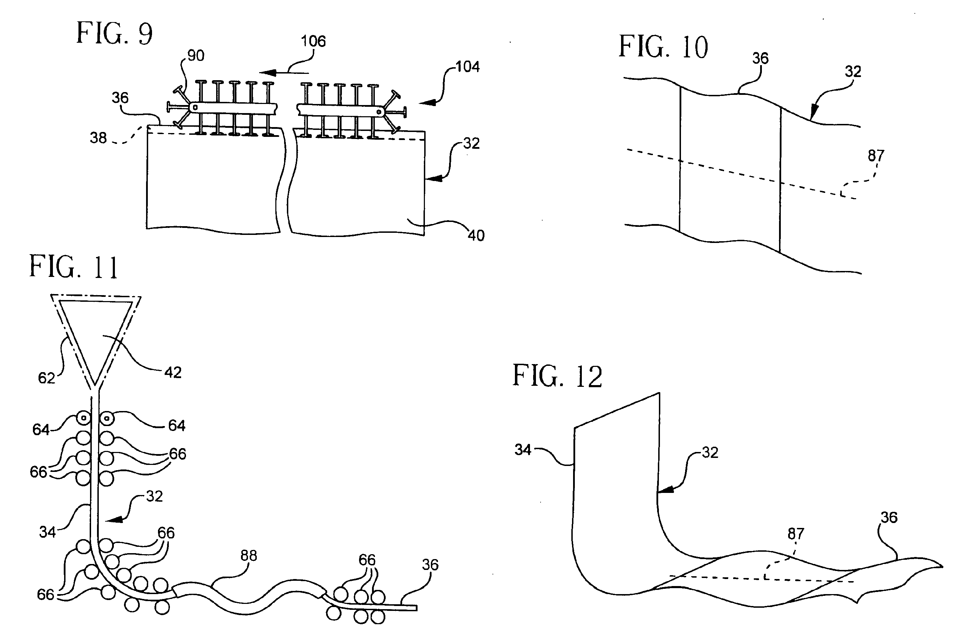

As end portion **36** of glass sheet **32** exits from the helicoidal turn, edge portions **38** are now oriented such that they form top and bottom edge portions of end portion **36,** and end portion **36** is supported by at least one of the pair of edge portions. In one example, at least one of the edge portions at end portion **36** is supported by a plurality of clamping assemblies **90** (FIG. 1), each clamping assembly abutting one of the edge portions **38.** In the illustrative example, clamping assemblies **90** engage the top edge portion. For example, as shown in FIG. 7, each clamping assembly **90** might include body portion **92** and a pair of scissored arms **94** operably coupled to body portion **90.** Each arm **94** in this embodiment includes a jaw **96** affixed to a distal end **98** thereof (relative to the body portion). As best seen in FIG. 8, each jaw **96** includes grippers **100** made of a suitable elastic and compliant material that cooperate with one another. Grippers **100** abut the top edge portion **38** of end portion **36,** and securely support end portion **36** in a vertical orientation. As illustrated in Fig. 9, each of clamping assemblies **90** is supported from continual-loop supporting track assembly **104** that rotates in a direction as indicated by directional arrow **106,** thereby supporting end portion **36** along the line of production. As will be understood, any of a variety of arrangements could be utilized to provide the contemplated means for supporting the sheet, including combinations of rollers, bearings, air bearings, rolling assemblies, clamps, conveyor belts or the like, some of which are described further herein. Similarly, other different arrangements will likewise be known and/or applicable by those of ordinary skill in the art in accordance with the teachings of the present invention.
For example, flexible U-shaped channels (not shown) may be used to hold and guide edge portions **38.** The U-shaped channels may be used to hold at least one of the top or bottom edge portions, and preferably both.

Track assembly **104** may be configured so as to induce an arcuate shape, such as a substantially sinusoidal wave-type pattern as shown in FIG. 10, within end portion **36** along longitudinal axis **87** of the end portion **36.** This pattern can be induced within end portion **36** in a variety of ways, such as by track assembly **104** following a similar shape, a plurality of rollers **66** (FIG. 5) having axes arranged to the expected shape, and/or air bearing rails **88** (FIG. 4) or rolling conveyor belts **108** (FIG. 6), as outlined above, following this geometry. The inertia of glass sheet **32** is dramatically increased due to the induced bending in such a deflecting processing step, as compared to a planar condition, thereby providing additional rigidity to the glass sheet to increase the self supporting of large surface areas and prevent sagging of the sheet. The radius of the curve of the wave-type arcuate shape is preferably small enough to increase the inertia of the glass sheet, and large enough to avoid affecting permanent glass geometry. For example, a glass sheet having a thickness of about 0.7 mm and a width of between about 2 m to about 3 m may curve in a sinusoidal shape with a radius of at least about I m; more preferably at least about 2 meters, more preferably still at least about 5 m, and most preferably at least about 10 m. The skilled artisan will realize that the arcuate shape may be formed in the glass sheet while traversing heat treatment station **26,** such as lehr **110** as is known in the art.

Advantageously, practicing the present invention allows the heat treatment of a continuous glass sheet drawn from a fusion draw apparatus as described supra, without the need to increase the operating height of forming wedge **42.** Moreover, in a conventional downdraw fusion process form making glass sheet, the high temperature of the forming wedge relative to the generally cooler temperatures existing at the bottom of the draw, produces a chimney effect. Cutting individual glass panels from drawn glass sheet **32** at the bottom of the draw, as is conventionally done, may result in the production of glass chips traveling upward into the draw area, which chips may adhere to and contaminate the glass sheet. Beneficially, by practicing the persent invention, individual glass panels may be cut from the sheet at a location removed from the draw area. Once glass sheet **32** has been subjected to a first heat treatment, a cutting device, such as laser **112,** may be utilized to sever individual glass panel **114** from end portion **36.** In the illustrated example, laser **112** is supported in a manner such that movement of laser **112** is properly sequenced with movement of glass sheet **32** so that the forming process can be continuous and relatively high speed.

In still another embodiment according to the present invention and illustrated in FIG. 11, edge rolls **66** are used to bend end portion **36** of glass sheet **32** into a generally orthogonal orientation with respect to first portion **34,** wherein end portion **36** is generally horizontal, and then the end portion is deflected by air bearings **88** along an arcuate path (FIG. 12) extending longitudinally along axis **87** of glass sheet **32** while end portion **36** continues to travel in a generally horizontal direction. As previously described, deflecting end portion **36** into a arcuate shape beneficially increases the rigidity of the glass and prevents sagging of the body span between the edge portions. Preferably, the arcuate shape is substantially sinusoidal. Other apparatus and methods of support suitable for such use may be substituted for either or both bending end portion **36** into a generally orthogonal orientation or deflecting end portion **36** into an arcuate, preferably substantially sinusoidal shape, as previously described.

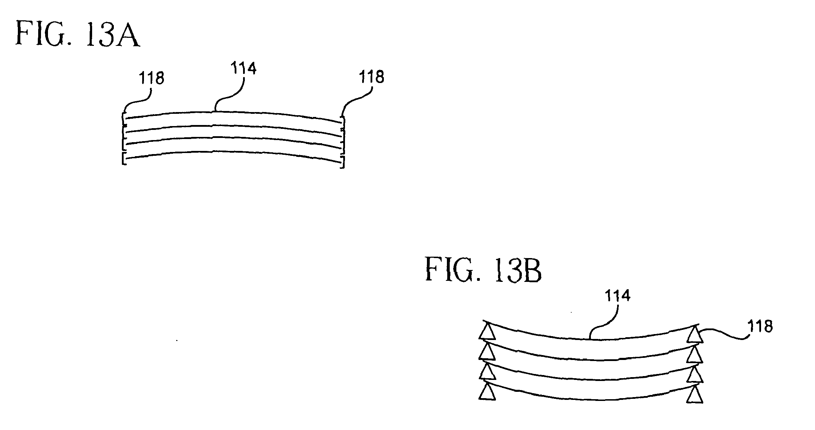

For high strain point glass panels which may be used in poly-Si display applications for example, additional heat treatment may be required. In this instance, once individual panel **114** is separated from end portion **36** of glass sheet **32,** panel **114** is transported to a second thermal treatment station **30** (as seen in FIG. 1) including a second lehr and subjected to a second heat treatment step. In the illustrated example of FIG. 13a, individual glass panels **114** are laterally aligned with one another in a vertical stack during the heat treatment cycle. The panels are vertically separated from each other and supported on their edges by pins, rails, grooves or other supporting devices **118** as may be known in the art. Beneficially, an upward curvature or bow is induced into the glass panels to prevent the glass panels from sagging and contacting adjacent panels. This upward curvature may be induced, for example, by designing the distance between horizontally arranged supporting means **118** such as those described supra to be slightly less than the width or span of the panel to be supported. By controlling the deflection in this manner, that is by inducing a controlled upward deflection rather than allowing unconstrained downward sag as is evident in FIG. 13b (wherein an upward bow is not induced), a greater number of glass panels may be vertically arranged within a given volume without contact between the panels than would be possible in the unconstrained configuration shown in FIG. 13b. For example, a 1.5 m² glass panel supported at its edges may undergo a downward sag due to gravity of as much as 15 mm. However, an induced upward curvature of only 2 mm in the same panel may significantly increase the attainable stacking density, limiting out-of-plane deflection to about I mm.

During the second heat treatment cycle, the temperature of the individual panels **114** may again be raised so as to allow proper annealing thereof, and the reduction in temperature controlled thereafter. Of course, other orientations of the panels **114** during the second heat treating step may be utilized, such as with the faces of the panels arranged vertically, as well as variations in the temperature progression used therein. In either the vertical or horizontal stacking method, second heat treatment station **30** may comprise a stationary lehr wherein the configuration of panels remains stationary within the lehr, or the panels may be preferably conveyed through second lehr via a conveyer belt or other conventional method of transportation such that the annealing may be performed in a more continuous manner rather than a batch approach wherein panel stacks are entered into and out of the lehr in groups. It should be noted that heat treating as defined herein may also include allowing the temperature of the panel **114** to return to ambient temperature without artificial alteration or manipulation.

The method for manufacturing an LCD glass sheet as shown and described herein results in a reduction in manufacturing costs typically associated with the same, while simultaneously reducing or eliminating contamination relating to associated cutting processes, reduces floor space required for associated thermal treatment, and providing sufficient and adequate support for glass sheeting while simultaneously reducing optical distortion of the panel.

In the foregoing description, it will be readily appreciated by those skilled in the art that modifications may be made to the invention without departing from the concepts disclosed herein. Such modifications are to be considered as included in the following claims, unless these claims by their language expressly state otherwise. Accordingly, the scope of the present invention should be considered in terms of the following claims and is understood not to be limited to the details of structure and operation shown and described in the specification and drawings.

## Claims

1. A method for manufacturing a glass sheet comprising:
producing a substantially planar glass sheet having a first portion and a second portion, wherein the first portion and the second portion are both initially in a substantially vertical first orientation, **characterized by**;
reorienting the second portion to a second orientation such that a transverse axis of the first portion is misaligned with a transverse axis of the second portion while the first portion of the glass sheet remains in the first orientation and the second portion of the glass sheet remains attached to the first portion of the glass sheet.

2. The method according to claim 1, further including deflecting the second portion of the glass sheet into an arcuate shape along at least a portion of a longitudinal axis of the glass sheet subsequent to the twisting.

3. The method according to claim 2, wherein the arcuate shape comprises a substantially sinusoidal pattern.

4. The method according to any of claims 1 to 3, further including heat treating the second portion while the second portion remains attached to the first portion.

5. The method according to claim 4, further including severing the second portion to produce a glass panel.

6. The method according to any of claims 1 to 5, wherein the step of producing the glass sheet includes providing the glass sheet with a pair of edges and a body portion positioned therebetween, and wherein the step of reorienting the glass sheet is performed without contacting the body portion of the glass sheet.

7. The method according to claim 6, wherein the step of reorienting the glass sheet comprises supporting the glass sheet with air bearings.

8. The method according to any of claims 1 to 5, further including supporting the second portion by clamping at least one of the edges with a clamping mechanism.

9. The method according to claim 8 wherein the clamping mechanism comprises a conveyor assembly, the conveyor assembly comprising a plurality of clamping mechanisms.

10. The method according to any of claims 1 to 9 wherein the second orientation is substantially orthogonal to the first orientation.

## Amended claims

### Amended claims in accordance with Rule 86(2) EPC.

**1.** A method for manufacturing a glass sheet comprising:
drawing a continuous glass sheet (32) from a sheet forming device (22) in a vertically downward first direction of travel (A), the glass sheet comprising a pair of edge portions (38) and a body portion (40) disposed therebetween,
**characterized by** the steps of:
twisting and reorienting the glass sheet in a reorientation assembly (24) such that an end portion (36) of the glass sheet travels in a second direction of travel (B) different from the first direction of travel; and
wherein the edge portions are supported in the reorientation assembly without contacting the body portion.

**2.** The method according to claim 1, wherein the second direction of travel is orthogonal to the first direction of travel.

**3.** The method according to claim 1 or 2, wherein the end portion (36) of the glass sheet is supported by at least one of the pair of edge portions (38).

**4.** The method according to claim 3, wherein the pair of edge portions (38) are supported by air bearings (88) during the twisting and reorienting.

**5.** The method according to any preceding claim, further including deflecting the end portion (36) of the glass sheet into an arcuate shape subsequent to the twisting and reorienting.

**6.** The method according to claim 5, wherein the arcuate shape comprises a substantially sinusoidal pattern.

**7.** The method according to any preceding claim, further including heat treating the end portion (36) of the glass sheet.

**8.** The method according to any preceding claim, further including severing the end portion (36) of the glass sheet to produce a glass panel (114).

**9.** The method according to claim 3, wherein the end portion (36) of the glass sheet is supported by clamping at least one of the edge portions with a clamping assembly (90).

**10.** The method according to claim 9, wherein the clamping assembly (90) comprises a conveyor assembly (104) for conveying the glass sheet in the second direction.
